# EUROPEAN PATENT SPECIFICATION

(11) **EP 3 062 247 B1**
(45) Date of publication and mention of the grant of the patent: **20.03.2019**
(21) Application number: 14855753.1
(22) Date of filing: 11.09.2014
(51) Int. Cl.: G06T 3/40, G06F 17/50, H04L 12/24

(54) **METHOD AND DEVICE FOR MAGNIFYING GRAPHIC WITHIN TOPOLOGY DIAGRAM, AND COMPUTER STORAGE MEDIUM**
VERFAHREN UND VORRICHTUNG ZUR VERGRÖSSERUNG EINER GRAFIK INNERHALB EINES TOPOLOGIEDIAGRAMMS UND COMPUTERSPEICHERMEDIUM
PROCÉDÉ ET DISPOSITIF PERMETTANT D'AGRANDIR UN GRAPHIQUE DANS UN DIAGRAMME TOPOLOGIQUE, ET SUPPORT DE STOCKAGE INFORMATIQUE

(30) Priority: 24.10.2013 CN 201310508689
(43) Date of publication of application: 31.08.2016
(73) Proprietor: ZTE Corporation, Shenzhen, Guangdong 518057 (CN)
(72) Inventor: ZHANG, Jingbo, Shenzhen Guangdong 518057 (CN); LIU, Chengjun, Shenzhen Guangdong 518057 (CN)
(74) Representative: Lavoix
(86) International application number: PCT/CN2014/086313
(87) International publication number: WO 2015/058595

(56) References cited:
- WO-A1-2013/139123
- CN-A- 101 813 487
- CN-A- 101 813 487
- CN-A- 102 214 054
- CN-A- 102 415 096
- US-B1- 8 386 593
- MANOJIT SARKAR ET AL: "Graphical Fisheye Views", COMMUNICATIONS OF THE ACM, vol. 37, no. 12, 1 December 1994 (1994-12-01), pages 73-83, XP055317329, United States ISSN: 0001-0782, DOI: 10.1145/198366.198384

## Description

### TECHNICAL FIELD

The disclosure relates to topology magnification, and in particular to a method and device for magnifying a graph in a topology, and a non-transitory computer-readable storage medium.

### BACKGROUND

In a management system of a network, a topology of the network graphically displays inter-network-equipment connections, such that maintenance personnel of the network may know information on equipment distribution and an equipment status at a glance.

The maintenance personnel may view a local network topological structure of the topology using a magnifier configured therefor based on a specific scaling ratio, which applies to a network with a simple topology. For a network with a complicated topology, within a limited viewing space, some Network Element (NE) equipment displayed in the same magnifier may tend to be displayed on top of one another, which makes it difficult to tell the equipment apart and to view information such as that on an icon, a tag, a warning, and an operating status of an equipment.

Moreover, a conventional magnifier magnifies graphic objects such as NE equipment and links included in a local topological structure all according to the same scaling ratio. Although distribution of positions of network elements may be distinguished most of the time, content displayed in a magnified graph may be distorted to different extents.

MANOJIT SARKAR ET AL, "Graphical Fisheye Views", COMMUNICATIONS OF THE ACM, vol.37, no.12, 1 December 1994, pages 73-83, XP055317329 discloses a fisheye lens approach to viewing and browsing graphs. A fisheye view of a graph shows an area of interest quite large and with detail and shows other areas successively smaller and in less detail. It achieves smooth integration of local detail and global context by repositioning and resizing elements of the graph.

### SUMMARY

In view of this, embodiments herein provide a method and device for magnifying a graph in a topology, and a non-transitory computer-readable storage medium, capable of preventing magnified content from being displayed distorted or equipment displayed on top of each other, ensuring clear display of the magnified graph in the topology.

The features of the method and device according to the present disclosure are defined in the independent claims, and the preferable features according to the present invention are defined in the dependent claims.

With the method and device for magnifying a graph in a topology and non-transitory computer-readable storage medium according to embodiments herein, a to-be-magnified area of a topology is determined; the to-be-magnified area is to be magnified at a current time; a graphic object in the to-be-magnified area is determined; a reference point in the to-be-magnified area is determined; the to-be-magnified area is magnified by magnifying a distance between the reference point and the graphic object in the to-be-magnified area; the graphic object in the magnified area is displayed. With the technical solution according to an embodiment herein, a local graph of a topology may be magnified by magnifying an absolute distance between two graphic objects while keeping relative positions of the graphic objects unchanged with respect to each other, thereby preventing distortion of displayed content after magnification and display of equipment on top of one another, ensuring clear display of a local graph in a topology.

### BRIEF DESCRIPTION OF THE DRAWINGS

Fig.1 is a flowchart of a method for magnifying a graph in a topology according to an embodiment herein.
Fig.2(a)∼Fig.2(c) are diagrams according to an embodiment herein.
Fig.3 is a flowchart of a method for magnifying a graph in a topology according to an embodiment herein.
Fig.4 is a diagram of a structure of a device for magnifying a graph in a topology according to an embodiment herein.

### DETAILED DESCRIPTION

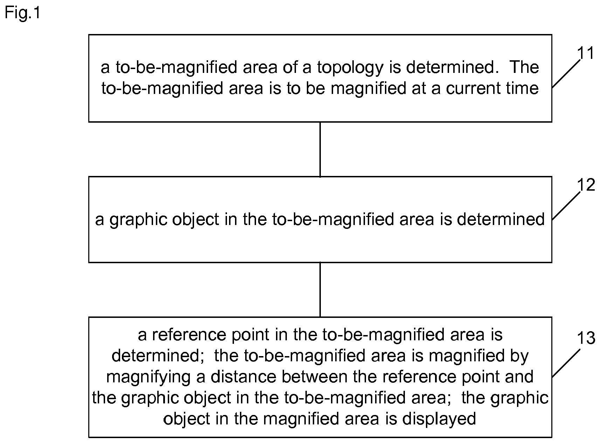

Embodiments herein disclose a method for magnifying a graph in a topology. As shown in Fig.1, the method includes steps as follows.

In step 11, a to-be-magnified area of a topology is determined. The to-be-magnified area is to be magnified at a current time.

Embodiments herein may be implemented based on a topology that can be scaled according to a specific scaling ratio. When maintenance personnel of a network wants to view an area in the topology, the maintenance personnel may click on the area of interest using input equipment such as a mouse. A management system of the network may acquire the clicking operation on the area, and set the area as the to-be-magnified area in the topology corresponding to the current time. The to-be-magnified area may be called a viewing area of a magnifier, i.e., an area to be magnified by the magnifier.

In step 12, a graphic object in the to-be-magnified area is determined.

The graphic objects may include at least one of: a whole or part of an icon of a Network Element (NE) equipment in the to-be-magnified area, a whole or part of an icon of an inter-NE link in the to-be-magnified area, an icon corresponding to information on an attribute of the NE equipment, and an icon corresponding to information on an attribute of the inter-NE link. The information on the attribute may include a tag, a warning, an operating status of NE equipment, etc. The icon corresponding to the information on the attribute may include an icon of the tag, an icon of the warning, an icon of the operating status, etc.

NE equipment appearing in the viewing area may be called first NE equipment. Generally, a link may be connected to NE equipment at both ends. A link may appear in the viewing area while NE equipment at both ends of the link do not appear in the viewing area. Such NE equipment may be called second NE equipment.

A graphic object corresponding to the first NE equipment may be determined as follows. An icon, a tag, a warning, an operating status, etc., of the first NE equipment may be set as graphic objects corresponding to the first NE equipment. In this case, the graphic objects corresponding to the NE equipment may be called complete graphic objects corresponding to the NE equipment.

A graphic object corresponding to the second NE equipment may be determined as follows. An icon of the second NE equipment may be set as the graphic object corresponding to the second NE equipment. In this case, the graphic object corresponding to the NE equipment may be called a streamlined graphic object corresponding to the NE equipment.

A graphic object corresponding to a link appearing in the viewing area may be determined as follows. An icon, a tag, a warning, an operating status, etc., of the link may be set as the graphic object corresponding to the link. A graphic object corresponding to a link may not be classified into the complete graphic objects and the streamlined graphic object.

Since the second NE equipment appears outside the viewing area, a graphic object corresponding to the second NE equipment may not be magnified for display. Such a graphic object may be determined to facilitate determination of the position and orientation of a link connected thereto.

That is, the management system of the network may draw the complete graphic objects corresponding to the first NE equipment appearing in the viewing area to facilitate viewing information on the NE equipment by the maintenance personnel. A streamlined graphic object corresponding to a second NE equipment appearing outside the viewing area may be drawn to facilitate determining the position and orientation of a link. In this way, the management system of the network may draw graphic objects in the to-be-magnified area to be magnified at an increased speed using less memory resources of the management system of the network.

In step 13, a reference point in the to-be-magnified area is determined; the to-be-magnified area is magnified by magnifying a distance between the reference point and the graphic object in the to-be-magnified area; the graphic object in the magnified area is displayed.

When the magnifier in the topology is made to be of a round shape, the to-be-magnified area magnified and displayed by the magnifier is also of a round shape. Thus, a centre point of the to-be-magnified area, i.e., the centre of the circular to-be-magnified area, may be selected as the reference point of the to-be-magnified area. A coordinate system may be established taking the reference point as a coordinate origin. In the coordinate system, a horizontal distance and a longitudinal distance of each graphic object in the to-be-magnified area to be magnified at the current time with respect to the reference point may be adjusted according to a scaling ratio of the magnifier. For example, for the moment the to-be-magnified area may include a graphic object corresponding to NE equipment D, such as an icon of the NE equipment D. In a coordinate system established with the reference point as the origin, the icon of the NE equipment D is at a horizontal distance a and a longitudinal distance b (both a and b being positive integers) to the reference point. The magnifier may have a scaling ratio C (C being a positive integer). After the adjustment (i.e., magnification), the icon of the NE equipment D may be at a horizontal distance Ca and a longitudinal distance Cb to the reference point. It may be seen that by adjusting the horizontal and longitudinal distances of each graphic object in the viewing area with respect to the reference point, a distance between two graphic objects in the viewing area may be magnified by a factor of C, which may prevent NE equipment being displayed on top of one another. In addition, with an embodiment herein, content of the magnified area may be displayed clearly by adjusting a scaling ratio parameter of the magnifier.

The description has been made with the example in which the magnifier is of a round shape and the centre of the round-shaped to-be-magnified area is taken as the reference point. An embodiment herein may also apply to a case in which the magnifier is rectangular, elliptical, and the like. The reference point may be set as the centre of the to-be-magnified area, or any other position in the to-be-magnified area that is not occupied by a graphic object.

As shown in Fig.1, the method may further include a step as follows.

The graphic object in the to-be-magnified area corresponding to the current time may be stored.

A graphic object in the to-be-magnified area corresponding to the current time may be stored, because in a practical application, the maintenance personnel may view a local graph in the topology at least once. When the topology is viewed for multiple times, the to-be-magnified area determined for each of the multiple viewing operations may vary, and thus a graphic object in the to-be-magnified area may vary, too. Therefore, according to an embodiment herein, the method may further include a step as follows.

It may be determined whether a graphic object in the to-be-magnified area corresponding to the current time is a stored graphic object corresponding to a last time. When it is determined that there is a graphic object in the to-be-magnified area corresponding to the current time that is no stored graphic object corresponding to the last time, both a graphic object in the to-be-magnified area corresponding to the current time that is also a stored graphic object corresponding to the last time, and the graphic object in the to-be-magnified area corresponding to the current time that is no stored graphic object corresponding to the last time, may be determined as graphic objects in the to-be-magnified area corresponding to the current time. Then, a distance between the reference point and a graphic object in the to-be-magnified area may be magnified. In addition, the graphic object in the magnified area may be displayed.

When compared with graphic objects appearing in the to-be-magnified area corresponding to the last time, for a new NE equipment newly appearing in the viewing area at the current time, if a streamlined graphic object corresponding to the new NE equipment has been stored corresponding to the last time, the streamlined graphic object may be deleted; and an icon, a tag, a warning, an operating status, etc., of the new NE equipment may all be determined as the complete graphic objects corresponding to the new NE equipment at the current time. For a new link newly appearing in the viewing area at the current time, an icon, a tag, a warning, an operating status, etc., of the link may be determined as the complete graphic objects corresponding to the link. When one of the two NE equipment located at both ends of a link that are connected through the link has been in the viewing area at the last time but has disappeared from the viewing area at the current time, the complete graphic objects corresponding to the NE equipment may be deleted, and merely the icon of the NE equipment may be determined as the streamlined graphic object corresponding to the NE equipment. When one of the two NE equipment located at both ends of a link that are connected through the link has not been in the viewing area at the last time but has appeared in the viewing area at the current time, the streamlined graphic object corresponding to the NE equipment stored for the last time may be deleted; and an icon, a tag, a warning, an operating status, etc., of the NE equipment may be determined as the complete graphic objects corresponding to the NE equipment.

For NE equipment having disappeared from the viewing area since the last time, the complete graphic objects corresponding to the NE equipment stored for the last time may be deleted. When a link connected to the NE equipment exists in the viewing area at the current time, an icon of the NE equipment may have to be set as a streamlined graphic object corresponding to the NE equipment. For a graphic object that has been related to a link in the viewing area at the last time but has stopped being related to a link in the viewing area at the current time, the graphic object related to the link stored for the last time may be deleted. When a streamlined graphic object stored for the last time relates to either of the two NE equipment located at two ends of the link and connected through the link, the streamlined graphic object may be deleted.

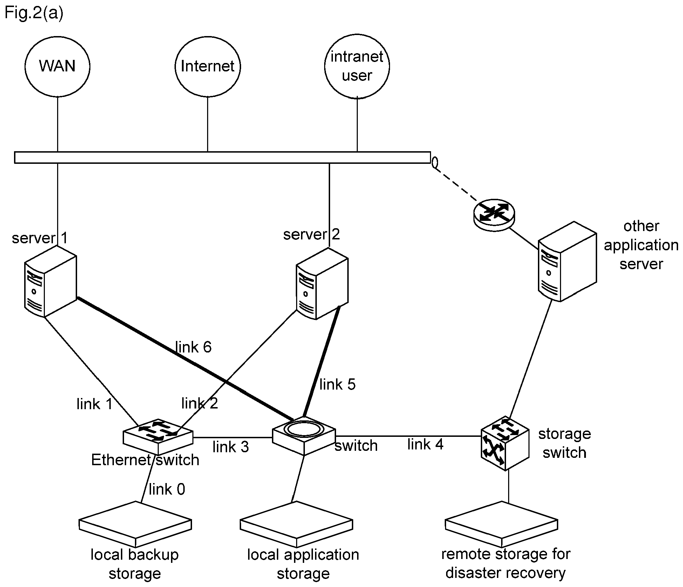

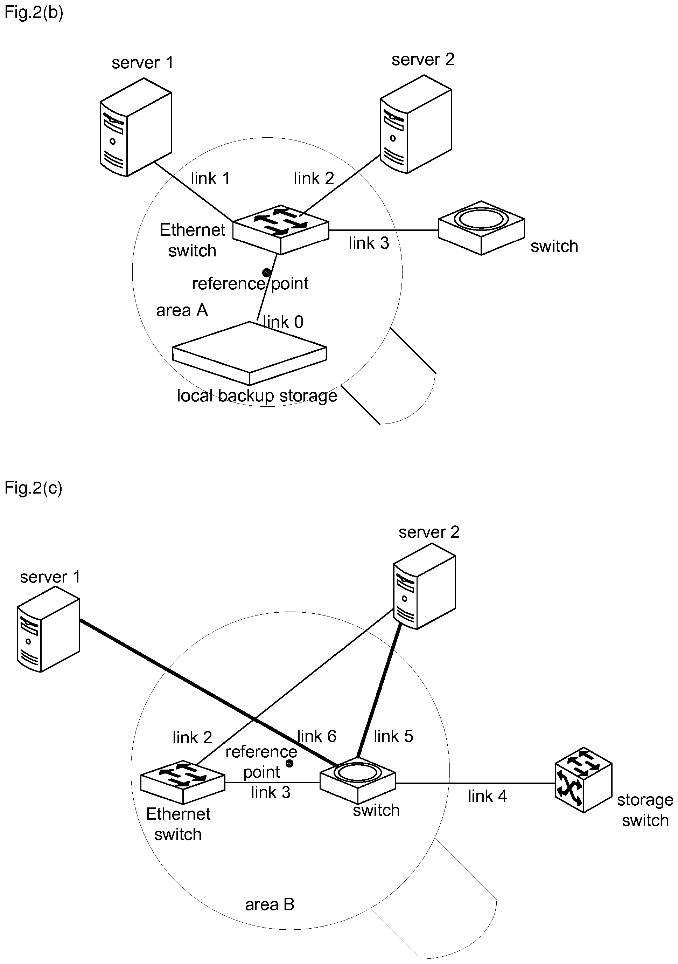

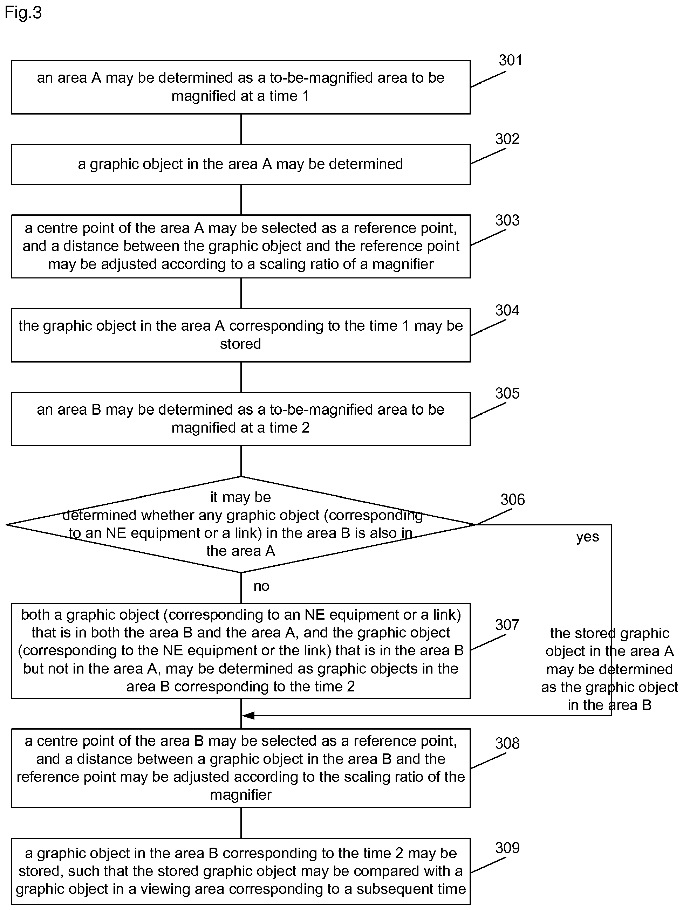

Fig.2(a) is a topology of a network. Fig.2(b) is a part of the topology of the network displayed by a magnifier at a time 1. Fig.2(c) is a part of the topology of the network displayed by a magnifier at a time 2. Fig.3 is a flowchart of a method for magnifying a graph in a topology according to an embodiment herein. A technical solution according to an embodiment herein will be explained further below with reference to Fig.2(a), Fig.2(c), and Fig.3.

In step 301, when a clicking operation on an area (i.e., area A) is acquired at a time 1, the area A may be determined as a to-be-magnified area to be magnified by a magnifier, as shown in Fig.2(b).

The first NE equipment appearing in the area A may include an Ethernet switch and a local backup storage. A link appearing in the area A may include a link 0, a link 1, a link 2, and a link 3. The second NE equipment appearing in the area A may include a server 1, a server 2, and a switch.

Step 302: a graphic object in the area A may be determined.

An icon, a tag, a warning, and an operating status of the Ethernet switch may have to be set as graphic objects corresponding (i.e., related) to the Ethernet switch. An icon, a tag, a warning, and an operating status of the local backup storage may have to be set as graphic objects related to the local backup storage. An icon, a tag, a warning, and an operating status of each of the link 0 through the link 3 may have to be set as graphic objects related to a corresponding link. An icon of the server 1 may have to be set as a graphic object corresponding to the server 1. An icon of the server 2 may have to be set as a graphic object corresponding to the server 2. An icon of the switch may have to be set as a graphic object corresponding to the switch. Given limited space, icons representing the warnings and the operating statuses are not shown in Fig.2(b).

In step 303, a centre point of the area A may be selected as a reference point, and a distance between the graphic object and the reference point may be adjusted according to a scaling ratio of a magnifier.

A coordinate system may be established taking the reference point as a coordinate origin. In the coordinate system, a horizontal distance and a longitudinal distance of each graphic object with respect to the reference point may be magnified. On the basis that connections among, and relative positions of, NE equipment and links within the to-be-magnified area are kept unchanged, horizontal and longitudinal distances of graphic objects related to the Ethernet switch and the local backup storage with respect to the reference point may be magnified respectively by the scaling ratio. Icons of the NE equipment may also be magnified by the magnifier by the scaling ratio. Icons of the link 0 through the link 3 between NE equipment may also be magnified by the scaling ratio. The absolute distance between NE equipment may be magnified, such that when viewed with the magnifier, NE equipment within the area A will not appear on top of one another. Moreover, an icon of NE equipment may also be magnified, preventing distortion of displayed content.

In step 304, the graphic object in the area A corresponding to the time 1 may be stored.

Graphic objects stored at the time 1 may include: the graphic objects related to the Ethernet switch, the local backup storage, the link 0, the link 1, the link 2, and the link 3; and the graphic objects related to the server 1, the server 2, and the switch.

In step 305, when a clicking operation on an area (i.e., area B) is acquired at a time 2, the area B may be determined as a to-be-magnified area to be magnified by a magnifier, as shown in Fig.2(c).

The first NE equipment appearing in the area A may include the Ethernet switch and the switch. A link appearing in the area B may include the link 2, the link 3, the link 4, the link 5, and the link 6. The second NE equipment appearing in the area B may include the server 1, the server 2, and the storage switch.

In step 306, graphic objects corresponding to the NE equipment and links appearing in the area B at the time 2 may be compared to the graphic objects corresponding to the NE equipment and links appearing in the area A at the time 1 to see whether there is any difference. When there is a difference, step 307 may be executed. Otherwise, the graphic objects stored at the time 1 may be determined as graphic objects in the area B at the time 2, and the flow may continue at step 308.

The switch may have appeared in the area B as new NE equipment since the last time 1. The link 4, the link 5, and the link 6 may be may have appeared in the area B as new links since time 1. The local backup storage has appeared in the area A but not in the area B.

In step 307, both a graphic object (corresponding to an NE equipment or a link) that is in both the area B and the area A, and the graphic object (corresponding to the NE equipment or the link) that is in the area B but not in the area A, may be determined as graphic objects in the area B corresponding to the time 2.

The graphic objects related to the links 0, 1 and the local backup storage stored for the time 1 may be deleted. The graphic objects related to the Ethernet switch stored at the time 1 may be kept as the graphic object related to the Ethernet switch at the time 2. The graphic object related to the link 2 stored at the time 1 may be kept as the graphic object related to the link 2 at the time 2. The graphic object related to the link 3 stored at the time 1 may be kept as the graphic object related to the link 3 at the time 2. The graphic object related to the server 1 stored at the time 1 may be kept as the graphic object corresponding to the server 1 at the time 2. The graphic object related to the server 2 stored at the time 1 may be kept as the graphic object corresponding to the server 2 at the time 2.

The icon, the tag, the warning, and the operating status of the switch may be set as the graphic objects related to the switch at the time 2. The icons, tags, warnings, and operating statuses of each of the links 4 through 6 may be set as graphic objects related to the corresponding link. The icon of the storage switch may be set as the graphic object related to the storage switch.

Given limited space, icons representing the warnings and the operating statuses are not shown in Fig.2(c).

In step 308, a centre point of the area B may be selected as a reference point, and a distance between a graphic object in the area B and the reference point may be adjusted according to the scaling ratio of the magnifier.

A coordinate system may be established taking the reference point, i.e., the centre point of the area B, as a coordinate origin. In the coordinate system, a horizontal distance and a longitudinal distance of a graphic object in the area B with respect to the reference point may be magnified. On the basis that connections among, and relative positions of, NE equipment and links within the area B are kept unchanged, horizontal and longitudinal distances of the Ethernet switch and the switch with respect to the reference point may be magnified respectively by the scaling ratio. Icons of the Ethernet switch and the switch may also be magnified by the magnifier by the scaling ratio. Icons of the links 2 through 6 between NE equipment may also be magnified by the scaling ratio.

In step 309, a graphic object in the area B corresponding to the time 2 may be stored, such that the stored graphic object may be compared with a graphic object in a viewing area corresponding to a subsequent time.

In the abovementioned embodiment, when it is determined that the NE equipment and links appearing in the area B at the time 2 are different from those appearing in the area A at the time 1, it means that the area to be magnified at times 1 is different from the area to be magnified at time 2. When it is determined that the NE equipment and links appearing in the area B at the time 2 are identical to those appearing in the area A at the time 1, it means that the area to be magnified at times 1 is identical to the area to be magnified at time 2. In this case, the graphic objects stored at the time 1 may be determined as the graphic objects in the area B at the time 2. In addition, distances of the graphic objects stored at the time 1 with respect to the reference point corresponding to the area B may be magnified and displayed at the time 2 according to the scaling ratio of the magnifier.

In addition, an embodiment herein further provides a non-transitory computer-readable storage medium. The non-transitory computer-readable storage medium may store therein computer-executable instructions for executing the method for magnifying a graph in a topology.

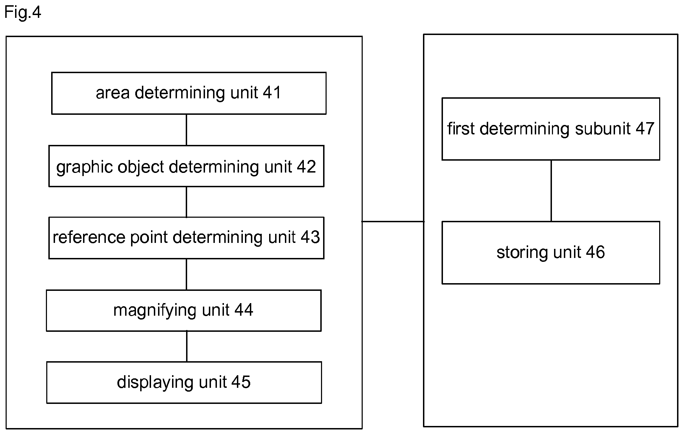

Based on the method for magnifying a graph in a topology, an embodiment herein further provides a device for magnifying a graph in a topology. As shown in Fig.4, the device includes: an area determining unit 41, a graphic object determining unit 42, a reference point determining unit 43, a magnifying unit 44, and a displaying unit 45.

The area determining unit 41 is configured for: determining a to-be-magnified area of a topology. The to-be-magnified area is to be magnified at a current time.

The graphic object determining unit 42 is configured for: determining a graphic object in the to-be-magnified area.

The reference point determining unit 43 is configured for: determining a reference point in the to-be-magnified area.

The magnifying unit 44 is configured for: magnifying the to-be-magnified area by magnifying a distance between the reference point and the graphic object in the to-be-magnified area.

The displaying unit 45 is configured for: displaying the graphic object in the magnified area.

The device may further include a storing unit 46 configured for: storing the graphic object in the to-be-magnified area corresponding to the current time.

The graphic object determining unit 42 may be configured for: setting, as the graphic object in the to-be-magnified area, at least one of: a whole or part of an icon of a Network Element (NE) equipment in the to-be-magnified area, a whole or part of an icon of an inter-NE link in the to-be-magnified area, an icon corresponding to information on an attribute of the NE equipment, and an icon corresponding to information on an attribute of the inter-NE link.

In a practical application, the maintenance personnel may view a local graph in the topology at least once. When the topology is viewed for multiple times, the to-be-magnified area determined by the area determining unit 41 may vary from time to time, and thus a graphic object in the to-be-magnified area as determined by the graphic object determining unit 42 may vary, too. Therefore, each time a magnified graphic object is viewed, the storing unit 46 may store the graphic object. Such storage operation is performed, because a graphic object in the to-be-magnified area to be viewed at the current time may or may not have been there when viewed at the last time.

The graphic object determining unit may further include: a first determining subunit 47 configured for: determining whether a graphic object in the to-be-magnified area corresponding to the current time is a stored graphic object corresponding to a last time, and trigger a second determining subunit when it is determined that there is a graphic object in the to-be-magnified area corresponding to the current time that is no stored graphic object corresponding to the last time; and
the second determining subunit configured for: determining both a graphic object in the to-be-magnified area corresponding to the current time that is also a stored graphic object corresponding to the last time, and the graphic object in the to-be-magnified area corresponding to the current time that is no stored graphic object corresponding to the last time, as graphic objects in the to-be-magnified area corresponding to the current time.

The reference point determining unit 43 may be configured for: determining a centre point of the to-be-magnified area as the reference point of the to-be-magnified area.

The magnifying unit 44 may further be configured for: establishing a coordinate system taking the determined reference point as a coordinate origin, and adjusting, according to a set scaling ratio, a horizontal distance and a longitudinal distance of a graphic object in the to-be-magnified area with respect to the reference point.

The displaying unit 45 may be configured for: displaying the graphic object in the magnified area.

For a new NE equipment newly appearing in the viewing area at the current time, if a streamlined graphic object corresponding to the new NE equipment has been stored corresponding to the last time, the graphic object determining unit 42 may delete the streamlined graphic object and determine an icon, a tag, a warning, an operating status, etc., of the new NE equipment as the complete graphic objects corresponding to the new NE equipment at the current time. For a new link newly appearing in the viewing area at the current time, the graphic object determining unit 42 may determine an icon, a tag, a warning, an operating status, etc., of the link as the complete graphic objects corresponding to the link. When one of the two NE equipment located at both ends of a link that are connected through the link has been in the viewing area at the last time but has disappeared from the viewing area at the current time, the graphic object determining unit 42 may delete the complete graphic objects corresponding to the NE equipment, and determine merely the icon of the NE equipment as the streamlined graphic object corresponding to the NE equipment. When one of the two NE equipment located at both ends of a link that are connected through the link has not been in the viewing area at the last time but has appeared in the viewing area at the current time, the graphic object determining unit 42 may delete the streamlined graphic object corresponding to the NE equipment stored for the last time and determine an icon, a tag, a warning, an operating status, etc., of the NE equipment as the complete graphic objects corresponding to the NE equipment.

For NE equipment having disappeared from the viewing area since the last time, the graphic object determining unit 42 may delete the complete graphic objects corresponding to the NE equipment stored for the last time. When a link connected to the NE equipment exists in the viewing area at the current time, the graphic object determining unit 42 may set an icon of the NE equipment as a streamlined graphic object corresponding to the NE equipment. For a graphic object that has been related to a link in the viewing area at the last time but has stopped being related to a link in the viewing area at the current time, the graphic object determining unit 42 may delete the graphic object related to the link stored for the last time. When a streamlined graphic object stored for the last time relates to either of the two NE equipment located at two ends of the link and connected through the link, the graphic object determining unit 42 may delete the streamlined graphic object.

Refer to description in the method for concepts such as the whole graphic object, the streamlined graphic object, the first NE equipment, the second NE equipment and the like, which will not be repeated.

Embodiments herein will be further described below with reference to Fig.2(a)∼Fig.2(c).

Fig.2(a) is a topology of a network. When acquiring a clicking operation on an area (i.e., area A) at a time 1, the area determining unit 41 may determine the area A as a to-be-magnified area to be magnified by a magnifier, as shown in Fig.2(b). The first NE equipment appearing in the area A may include an Ethernet switch and a local backup storage. A link appearing in the area A may include a link 0, a link 1, a link 2, and a link 3. The second NE equipment appearing in the area A may include a server 1, a server 2, and a switch. The area determining unit 41 may trigger the graphic object determining unit 42.

The graphic object determining unit 42 may set an icon, a tag, a warning, and an operating status of the Ethernet switch as graphic objects corresponding (i.e., related) to the Ethernet switch; set an icon, a tag, a warning, and an operating status of the local backup storage as graphic objects related to the local backup storage; set an icon, a tag, a warning, and an operating status of each of the link 0 through the link 3 as graphic objects related to a corresponding link; set an icon of the server 1 as a graphic object corresponding to the server 1; set an icon of the server 2 as a graphic object corresponding to the server 2; set an icon of the switch as a graphic object corresponding to the switch. The graphic object determining unit 42 may then inform the reference point determining unit 43.

The reference point determining unit 43 may select the centre point of the area to be magnified, i.e., the area A, as the reference point, and trigger the magnifying unit 44.

The magnifying unit 44 may establish a coordinate system taking the reference point as a coordinate origin, and adjust a horizontal distance and a longitudinal distance of a graphic object in the area A with respect to the reference point according to the scaling ratio. The displaying unit 45 may display the graphic object after magnification.

On the basis that connections among, and relative positions of, NE equipment and links within the to-be-magnified area are kept unchanged, the magnifying unit 44 may magnify horizontal and longitudinal distances of graphic objects related to the Ethernet switch and the local backup storage with respect to the reference point respectively by the scaling ratio. Icons of the NE equipment may also be magnified by the magnifier by the scaling ratio. Icons of the link 0 through the link 3 between NE equipment may also be magnified by the scaling ratio. The absolute distance between NE equipment may be magnified, such that when viewed with the magnifier, NE equipment within the area A will not appear on top of one another. Moreover, an icon of NE equipment may also be magnified, preventing distortion of displayed content.

Graphic objects stored by the storing unit 46 at the time 1 may include: the graphic objects related to the Ethernet switch, the local backup storage, the link 0, the link 1, the link 2, and the link 3; and the graphic objects related to the server 1, the server 2, and the switch.

When acquiring a clicking operation on an area (i.e., area B) at a time 2, the area determining unit 41 may determine the area B as a to-be-magnified area to be magnified by a magnifier, as shown in Fig.2(c). The first NE equipment appearing in the area A may include the Ethernet switch and the switch. A link appearing in the area B may include the link 2, the link 3, the link 4, the link 5, and the link 6. The second NE equipment appearing in the area B may include the server 1, the server 2, and the storage switch.

The first determining subunit 47 may compare graphic objects corresponding to the NE equipment and links appearing in the area B at the time 2 to the graphic objects corresponding to the NE equipment and links appearing in the area A at the time 1 to see whether there is any difference; and when there is a difference, trigger the second determining subunit. The first determining subunit 47 may determine by comparison that: the switch may have appeared in the area B as new NE equipment since the last time 1; the link 4, the link 5, and the link 6 may be may have appeared in the area B as new links since time 1; the local backup storage has appeared in the area A but not in the area B.

The graphic object determining unit 42 may delete the graphic objects related to the links 0, 1 and the local backup storage stored for the time 1; keep the graphic objects related to the Ethernet switch stored at the time 1 as the graphic object related to the Ethernet switch at the time 2; keep the graphic object related to the link 2 stored at the time 1 as the graphic object related to the link 2 at the time 2; keep the graphic object related to the link 3 stored at the time 1 as the graphic object related to the link 3 at the time 2; keep the graphic object related to the server 1 stored at the time 1 as the graphic object corresponding to the server 1 at the time 2; keep the graphic object related to the server 2 stored at the time 1 as the graphic object corresponding to the server 2 at the time 2.

The graphic object determining unit 42 may set the icon, the tag, the warning, and the operating status of the switch as the graphic objects related to the switch at the time 2; set the icons, tags, warnings, and operating statuses of each of the links 4 through 6 as graphic objects related to the corresponding link; set the icon of the storage switch as the graphic object related to the switch.

The reference point determining unit 43 may select the centre point of the to-be-magnified area, i.e., the area B, as the reference point. The magnifying unit 44 may establish a coordinate system taking the reference point as a coordinate origin; adjust, according to the scaling ratio, a horizontal distance and a longitudinal distance of a graphic object in the to-be-magnified with respect to the reference point. The displaying unit 45 may display the graphic object of which the distance with respect to the reference point has been magnified.

On the basis that connections among, and relative positions of, NE equipment and links within the area B are kept unchanged, horizontal and longitudinal distances of the Ethernet switch and the switch with respect to the reference point may be magnified respectively by the scaling ratio. Icons of the Ethernet switch and the switch may also be magnified by the magnifier by the scaling ratio. Icons of the links 2 through 6 connecting the NE equipment may also be magnified by the scaling ratio.

The storing unit 46 may store graphic objects corresponding to NE equipment and links in the to-be-magnified area at the time 2, such that the stored graphic objects may be compared to graphic objects corresponding to NE equipment and links existing in the viewing area at a subsequent time.

In a practical application, all of the area determining unit 41, the graphic object determining unit 42, the reference point determining unit 43, the magnifying unit 44, the displaying unit 45, the storing unit 46, and the first determining subunit 47 may be implemented by a Central Processing Unit (CPU), or a Digital Signal Processor (DSP), or a Field Programmable Gate Array (FPGA) or the like. The CPU, the DSP, and the FPGA may all be built in the management system of a network.

Those skilled in the art should know that function of each processing unit in the device for magnifying a graph in a topology shown in Fig.4 may be understood with reference to description to the method for magnifying a graph in a topology. Those skilled in the art should know that the function of each processing unit in the device for magnifying a graph in a topology shown in Fig.4 may be implemented by a program run on a processor, or by a specific logic circuit.

With the method and device for magnifying a graph in a topology and non-transitory computer-readable storage medium according to embodiments herein, a to-be-magnified area of a topology is determined; the to-be-magnified area is to be magnified at a current time; a graphic object in the to-be-magnified area is determined; a reference point in the to-be-magnified area is determined; the to-be-magnified area is magnified by magnifying a distance between the reference point and the graphic object in the to-be-magnified area; the graphic object in the magnified area is displayed. With the technical solution according to an embodiment herein, a local graph of a topology may be magnified by magnifying an absolute distance between two graphic objects while keeping relative positions of the graphic objects unchanged with respect to each other, thereby preventing distortion of displayed content after magnification and display of equipment on top of one another, ensuring clear display of a local graph in a topology.

Those skilled in the art will know that an embodiment herein may provide a method, system, or computer program product. Therefore, an embodiment herein may take on a form of hardware, software, or a combination thereof. In addition, an embodiment herein may take on a form of a computer program product implemented on one or more computer available storage media (including but not limited to, magnetic disk memory, optic memory, and the like) containing computer available program codes.

The disclosure is illustrated with reference to flowcharts and/or block diagrams of the method, device (system) and computer-program product according to embodiments described herein. Note that each flow in the flowcharts and/or each block in the block diagrams as well as combination of flows in the flowcharts and/or blocks in the block diagrams may be implemented by instructions of a computer program. Such instructions may be offered in a processor of a general-purpose computer, a dedicated computer, an embedded processor or other programmable data processing devices to generate a machine, such that a device with a function specified in one or more flows of the flowcharts and/or one or more blocks in the block diagrams is produced by instructions executed by a processor of a computer or other programmable data processing devices.

These computer-program instructions may also be stored in a non-transitory computer-readable memory capable of guiding a computer or another programmable data processing device to work in a given way, such that the instructions stored in the computer-readable memory generate a manufactured good including an instruction device for implementing a function specified in one or more flows of the flowcharts and/or one or more blocks in the block diagrams.

These computer-program instructions may also be loaded in a computer or other programmable data processing devices, which thus executes a series of operations thereon to generate computer-implemented processing, such that the instructions executed on the computer or other programmable data processing devices provide the steps for implementing the function specified in one or more flows of the flowcharts or one or more blocks in the block diagrams.

What described are merely embodiments of the disclosure, and are not intended to limit the scope of the present disclosure.

### INDUSTRIAL APPLICABLITY

With the method and device for magnifying a graph in a topology and non-transitory computer-readable storage medium according to embodiments herein, a to-be-magnified area of a topology is determined; the to-be-magnified area is to be magnified at a current time; a graphic object in the to-be-magnified area is determined; a reference point in the to-be-magnified area is determined; the to-be-magnified area is magnified by magnifying a distance between the reference point and the graphic object in the to-be-magnified area; the graphic object in the magnified area is displayed. With the technical solution according to an embodiment herein, a local graph of a topology may be magnified by magnifying an absolute distance between two graphic objects while keeping relative positions of the graphic objects unchanged with respect to each other, thereby preventing distortion of displayed content after magnification and display of equipment on top of one another, ensuring clear display of a local graph in a topology.

## Claims

1. A method for magnifying a local graph in a topology, wherein the method comprises:
determining, in the topology, an area to be magnified at a current time (11, 301, 305);
determining each graphic object in the area to be magnified at the current time (12, 302);
determining a reference point in the area to be magnified at the current time; magnifying the area to be magnified at the current time by magnifying a distance between the reference point and the each graphic object in the area to be magnified at the current time (303, 308); and displaying the each graphic object after magnification (13);
storing, by a storing unit (46), the each graphic object in the area to be magnified at the current time (304, 309),
wherein the determining the each graphic object in the area to be magnified at the current time comprises:
determining each graphic object corresponding to any first Network Element, abbreviated as NE, equipment appearing in the area to be magnified at the current time as complete graphic objects corresponding to the any first NE equipment; and
determining each graphic object corresponding to any link appearing in the area to be magnified at the current time as an icon, a tag, a warning, and an operating status of the any link,
wherein the method further comprises:
determining each graphic object corresponding to any second NE equipment at any end of the any link not appearing in the area to be magnified at the current time as a streamlined graphic object corresponding to the any second NE equipment,
wherein the complete graphic objects corresponding to a NE equipment are an icon, a tag, a warning, and an operating status of the NE equipment, and the streamlined graphic object corresponding to the NE equipment is the icon of the NE equipment,
wherein the magnifying the area to be magnified at the current time by magnifying the distance between the reference point and the each graphic object in the area to be magnified at the current time and displaying the each graphic object after magnification comprises:
establishing a coordinate system taking the reference point as a coordinate origin; In the coordinate system, adjusting a horizontal distance and a longitudinal distance of the each graphic object in the area to be magnified at the current time with respect to the reference point according to a scaling ratio, while keeping connections among, and relative positions of, the any first NE equipment and the any link unchanged; magnifying the icon of the any first NE equipment and the icon of the any link by the scaling ratio.

2. The method according to claim 1, wherein the determining the each graphic object in the area to be magnified at the current time comprises:
for a new NE equipment newly appearing in the area to be magnified at the current time when compared with any graphic object appearing in a to-be-magnified area corresponding to a last time, deleting any streamlined graphic object corresponding to the new NE equipment stored for the last time, and determining the complete graphic objects corresponding to the new NE equipment at the current time;
for a new link newly appearing in the area to be magnified at the current time when compared with the any graphic object appearing in the to-be-magnified area corresponding to the last time, determining an icon, a tag, a warning, and an operating status of the new link as a graphic object corresponding to the new link;
when one of two NE equipment located at both ends of a link has been in the to-be-magnified area corresponding to the last time but has disappeared from the area to be magnified at the current time, deleting the complete graphic objects corresponding to the one of the two NE equipment, and determining the streamlined graphic object corresponding to the one of the two NE equipment.

3. A device for magnifying a local graph in a topology, wherein the device comprises:
an area determining unit (41) configured for: determining, in the topology, an area to be magnified at a current time;
a graphic object determining unit (42) configured for: determining each graphic object in the area to be magnified at the current time;
a reference point determining unit (43) configured for: determining a reference point in the area to be magnified at the current time;
a magnifying unit (44) configured for: magnifying the area to be magnified at the current time by magnifying a distance between the reference point and the each graphic object in the area to be magnified at the current time; and
a displaying unit (45) configured for: displaying the each graphic object after magnification;
a storing unit (46) configured for: storing the each graphic object in the area to be magnified at the current time,
wherein the graphic object determining unit (42) is further configured for:
determining each graphic object corresponding to any first Network Element, abbreviated as NE, equipment appearing in the area to be magnified at the current time as complete graphic objects corresponding to the any first NE equipment; and
determining each graphic object corresponding to any link appearing in the area to be magnified at the current time as an icon, a tag, a warning, and an operating status of the any link;
determining each graphic object corresponding to any second NE equipment at any end of the any link not appearing in the area to be magnified at the current time as a streamlined graphic object corresponding to the any second NE equipment,
wherein the complete graphic objects corresponding to a NE equipment are an icon, a tag, a warning, and an operating status of the NE equipment, and the streamlined graphic object corresponding to the NE equipment is the icon of the NE equipment,
wherein the magnifying unit (44) is further configured for:
establishing a coordinate system taking the reference point as a coordinate origin; In the coordinate system, adjusting a horizontal distance and a longitudinal distance of the each graphic object in the area to be magnified at the current time with respect to the reference point according to a scaling ratio, while keeping connections among, and relative positions of, the any first NE equipment and the any link unchanged; magnifying the icon of the any first NE equipment and the icon of the any link by the scaling ratio.

4. The device according to claim 3, wherein the graphic object determining unit (42) is further configured for:
for a new NE equipment newly appearing in the area to be magnified at the current time when compared with any graphic object appearing in a to-be-magnified area corresponding to a last time, deleting any streamlined graphic object corresponding to the new NE equipment stored for the last time, and determining the complete graphic objects corresponding to the new NE equipment at the current time;
for a new link newly appearing in the area to be magnified at the current time when compared with the any graphic object appearing in the to-be-magnified area corresponding to the last time, determining an icon, a tag, a warning, and an operating status of the new link as a graphic object corresponding to the new link;
when one of two NE equipment located at both ends of a link has been in the to-be-magnified area corresponding to the last time but has disappeared from the area to be magnified at the current time, deleting the complete graphic objects corresponding to the one of the two NE equipment, and determining the streamlined graphic object corresponding to the one of the two NE equipment.

5. A computer-readable storage medium, storing therein computer-executable instructions for executing the method according to any one of claims 1 to 2.

## Patentansprüche

1. Verfahren zum Vergrößern einer lokalen Graphik in einer Topologie, wobei das Verfahren umfasst:
Bestimmen eines zu einem aktuellen Zeitpunkt (11, 301, 305) zu vergrößernden Bereichs in der Topologie;
Bestimmen jedes graphischen Objekts im zum aktuellen Zeitpunkt (12, 302) zu vergrößernden Bereich;
Bestimmen eines Bezugspunktes im Bereich, der zum aktuellen Zeitpunkt zu vergrößern ist;
Vergrößern des zum aktuellen Zeitpunkt zu vergrößernden Bereichs durch Vergrößern eines Abstands zwischen dem Bezugspunkt und jedem graphischen Objekt im zum aktuellen Zeitpunkt (303, 308) zu vergrößernden Bereich und Anzeigen jedes graphischen Objekts nach der Vergrößerung (13);
Speichern jedes graphischen Objekts im Bereich, der zum aktuellen Zeitpunkt (304, 309) zu vergrößern ist, durch eine Speichereinheit (46),
wobei das Bestimmen jedes graphischen Objekts im zum aktuellen Zeitpunkt zu vergrößernden Bereich umfasst:
Bestimmen jedes graphischen Objekts, das einer beliebigen ersten Netzwerkelementausrüstung (NE-Ausrüstung) entspricht, die im Bereich, der zum aktuellen Zeitpunkt zu vergrößern ist erscheint, als komplette graphische Objekte, die der beliebigen ersten NE-Ausrüstung entsprechen, und
Bestimmen jedes graphischen Objekts, das einer beliebigen Verknüpfung, die im zum aktuellen Zeitpunkt zu vergrößernden Bereich erscheint, entspricht, als Symbol, Tag, Warnung und Betriebszustand der beliebigen Verknüpfung;
wobei das Verfahren ferner umfasst:
Bestimmen jedes graphischen Objektes, das einer beliebigen zweiten NE-Ausrüstung an einem beliebigen Ende der beliebigen Verknüpfung, die im zum aktuellen Zeitpunkt zu vergrößernden Bereich nicht erscheint, entspricht, als optimiertes graphisches Objekt, das der beliebigen zweiten NE-Ausrüstung entspricht,
wobei die kompletten graphischen Objekte, die einer NE-Ausrüstung entsprechen, ein Symbol, ein Tag, eine Warnung und ein Betriebszustand der NE-Ausrüstung sind, und das optimierte graphische Objekt, das der NE-Ausrüstung entspricht, das Symbol der NE-Ausrüstung ist,
wobei das Vergrößern des zum aktuellen Zeitpunkt zu vergrößernden Bereichs durch Vergrößern des Abstands zwischen dem Bezugspunkt und jedem graphischen Objekt im zum aktuellen Zeitpunkt zu vergrößernden Bereich und das Anzeigen jedes graphischen Objekts nach der Vergrößerung umfassen:
Erstellen eines Koordinatensystems, wobei als Koordinatenursprung der Bezugspunkt genommen wird;
im Koordinatensystem: Einstellen eines horizontalen Abstands und eines länglichen Abstands jedes graphischen Objekts im zum aktuellen Zeitpunkt zu vergrößernden Bereich in Bezug auf einen Bezugspunkt gemäß einem Skalierungsverhältnis, wobei die Verbindungen zwischen der beliebigen ersten NE-Ausrüstung und der beliebigen Verknüpfung sowie deren relative Lagen unverändert bleiben;
Vergrößern des Symbols der beliebigen ersten NE-Ausrüstung und des Symbols der beliebigen Verknüpfung um das Skalierungsverhältnis.

2. Verfahren nach Anspruch 1, wobei das Bestimmen jedes graphischen Objekts im zum aktuellen Zeitpunkt zu vergrößernden Bereich umfasst:
für eine neue NE-Ausrüstung, die im zum aktuellen Zeitpunkt zu vergrößernden Bereich im Vergleich zu einem in einem einem letzten Zeitpunkt entsprechenden zu vergrößernden Bereich erscheinenden graphischen Objekt neu erscheint: Löschen eines für den letzten Zeitpunkt gespeicherten optimierten graphischen Objekts, das der neuen NE-Ausrüstung entspricht, und Bestimmen der kompletten graphischen Objekte, die zum aktuellen Zeitpunkt der neuen NE-Ausrüstung entsprechen;
für eine neue Verknüpfung, die im zum aktuellen Zeitpunkt zu vergrößernden Bereich im Vergleich zum in einem dem letzten Zeitpunkt entsprechenden zu vergrößernden Bereich erscheinenden graphischen Objekt neu erscheint: Bestimmen eines Symbols, eines Tags, einer Warnung und eines Betriebszustands der neuen Verknüpfung als graphisches Objekt, das der neuen Verknüpfung entspricht;
wenn eine von zwei NE-Ausrüstungen, die an beiden Enden einer Verknüpfung angeordnet sind, im zu vergrößernden Bereich gewesen ist, der dem letzten Zeitpunkt entspricht, aber aus dem zum aktuellen Zeitpunkt zu vergrößernden Bereich verschwunden ist: Löschen der kompletten graphischen Objekte, die der einen der beiden NE-Ausrüstungen entsprechen, und Bestimmen des optimierten graphischen Objekts, das der einen der beiden NE-Ausrüstungen entspricht.

3. Vorrichtung zum Vergrößern einer lokalen Graphik in einer Topologie, wobei die Vorrichtung umfasst:
eine Bereichsbestimmungseinheit (41), die zum Bestimmen eines zu einem aktuellen Zeitpunkt zu vergrößernden Bereichs der Topologie konfiguriert ist;
eine Objektbestimmungseinheit (42), die zum Bestimmen jedes graphischen Objekts im zum aktuellen Zeitpunkt zu vergrößernden Bereich konfiguriert ist;
eine Bezugspunktbestimmungseinheit (43), die zum Bestimmen eines Bezugspunktes im zum aktuellen Zeitpunkt zu vergrößernden Bereich konfiguriert ist;
eine Vergrößerungseinheit (44), die zum Vergrößern des zum aktuellen Zeitpunkt zu vergrößernden Bereichs durch Vergrößern eines Abstands zwischen dem Bezugspunkt und jedem graphischen Objekt im zum aktuellen Zeitpunkt zu vergrößernden Bereich konfiguriert ist, und
eine Anzeigeeinheit (45), die zum Anzeigen jedes graphischen Objekts nach der Vergrößerung konfiguriert ist;
eine Speichereinheit (46), die zum Speichern jedes graphischen Objekts im zum aktuellen Zeitpunkt zu vergrößernden Bereich konfiguriert ist;
wobei die Objektbestimmungseinheit (42) ferner zur Ausführung folgender Funktionen konfiguriert ist:
Bestimmen jedes graphischen Objekts, das einer beliebigen ersten Netzwerkelementausrüstung (NE-Ausrüstung) entspricht, die im Bereich, der zum aktuellen Zeitpunkt zu vergrößern ist erscheint, als komplette graphische Objekte, die der beliebigen ersten NE-Ausrüstung entspricht, und
Bestimmen jedes graphischen Objekts, das einer beliebigen Verknüpfung, die im zum aktuellen Zeitpunkt zu vergrößernden Bereich erscheint, entspricht, als Symbol, Tag, Warnung und Betriebszustand der beliebigen Verknüpfung;
Bestimmen jedes graphischen Objektes, das einer beliebigen zweiten NE-Ausrüstung an einem beliebigen Ende der beliebigen Verknüpfung, die im zum aktuellen Zeitpunkt zu vergrößernden Bereich nicht erscheint, entspricht, als optimiertes graphisches Objekt, das der beliebigen zweiten NE-Ausrüstung entspricht,
wobei die kompletten graphischen Objekte, die einer NE-Ausrüstung entsprechen, ein Symbol, ein Tag, eine Warnung und ein Betriebszustand der NE-Ausrüstung sind, und das optimierte graphische Objekt, das der NE-Ausrüstung entspricht, das Symbol der NE-Ausrüstung ist,
wobei die Vergrößerungseinheit (44) ferner zur Ausführung folgender Funktionen konfiguriert ist:
Erstellen eines Koordinatensystems, wobei als Koordinatenursprung der Bezugspunkt genommen wird;
im Koordinatensystem: Einstellen eines horizontalen Abstands und eines länglichen Abstands jedes graphischen Objekts im zum aktuellen Zeitpunkt zu vergrößernden Bereich in Bezug auf einen Bezugspunkt gemäß einem Skalierungsverhältnis, wobei die Verbindungen zwischen der beliebigen ersten NE-Ausrüstung und der beliebigen Verknüpfung sowie deren relative Lagen unverändert bleiben;
Vergrößern des Symbols der beliebigen ersten NE-Ausrüstung und des Symbols der beliebigen Verknüpfung um das Skalierungsverhältnis.

4. Vorrichtung nach Anspruch 3, wobei die Objektbestimmungseinheit (42) ferner zur Ausführung folgender Funktionen konfiguriert ist:
für eine neue NE-Ausrüstung, die im zum aktuellen Zeitpunkt zu vergrößernden Bereich im Vergleich zu einem in einem einem letzten Zeitpunkt entsprechenden zu vergrößernden Bereich erscheinenden graphischen Objekt neu erscheint: Löschen eines für den letzten Zeitpunkt gespeicherten optimierten graphischen Objekts, das der neuen NE-Ausrüstung entspricht, und Bestimmen der kompletten graphischen Objekte, die zum aktuellen Zeitpunkt der neuen NE-Ausrüstung entsprechen;
für eine neue Verknüpfung, die im zum aktuellen Zeitpunkt zu vergrößernden Bereich im Vergleich zum in einem dem letzten Zeitpunkt entsprechenden zu vergrößernden Bereich erscheinenden graphischen Objekt neu erscheint: Bestimmen eines Symbols, eines Tags, einer Warnung und eines Betriebszustands der neuen Verknüpfung als graphisches Objekt, das der neuen Verknüpfung entspricht;
wenn eine von zwei NE-Ausrüstungen, die an beiden Enden einer Verknüpfung angeordnet sind, im zu vergrößernden Bereich gewesen ist, der dem letzten Zeitpunkt entspricht, aber aus dem zum aktuellen Zeitpunkt zu vergrößernden Bereich verschwunden ist: Löschen der kompletten graphischen Objekte, die der einen der beiden NE-Ausrüstungen entsprechen, und Bestimmen des optimierten graphischen Objekts, das der einen der beiden NE-Ausrüstungen entspricht.

5. Computerlesbarer Datenträger, in dem von einem Computer ausführbare Befehle zur Ausführung des Verfahrens nach einem der Ansprüche 1 - 2 gespeichert sind.

## Revendications

1. Procédé d'agrandissement d'un graphique local dans une topologie, le procédé comprenant les étapes ci-dessous consistant à :
déterminer, dans la topologie, une zone à agrandir à un instant en cours (11, 301, 305) ;
déterminer chaque objet graphique dans la zone à agrandir à l'instant en cours (12, 302) ;
déterminer un point de référence dans la zone à agrandir à l'instant en cours ;
agrandir la zone à agrandir à l'instant en cours, en agrandissant une distance entre le point de référence et chaque objet graphique dans la zone à agrandir à l'instant en cours (303, 308) ; et
afficher chaque objet graphique suite à l'agrandissement (13) ;
stocker, par le biais d'une unité de stockage (46), chaque objet graphique dans la zone à agrandir à l'instant en cours (304, 309) ;
l'étape de détermination de chaque objet graphique dans la zone à agrandir à l'instant en cours comprenant les étapes ci-dessous consistant à :
déterminer chaque objet graphique correspondant à un quelconque premier équipement d'élément de réseau, « NE » en abrégé, apparaissant dans la zone à agrandir à l'instant en cours, en tant que des objets graphiques complets correspondant audit quelconque premier équipement NE ; et
déterminer chaque objet graphique correspondant à un lien quelconque apparaissant dans la zone à agrandir à l'instant en cours en tant qu'une icône, une étiquette, un avertissement, et un état de fonctionnement dudit lien quelconque ;
le procédé comprenant en outre l'étape ci-dessous consistant à :
déterminer chaque objet graphique correspondant à un quelconque second équipement NE à une quelconque extrémité dudit lien quelconque n'apparaissant pas dans la zone à agrandir à l'instant en cours, en tant qu'un objet graphique optimisé correspondant audit quelconque second équipement NE ;
dans lequel les objets graphiques complets correspondant à un équipement NE correspondent à une icône, une étiquette, un avertissement et un état de fonctionnement de l'équipement NE, et l'objet graphique optimisé correspondant à l'équipement NE est l'icône de l'équipement NE ;
dans lequel l'étape d'agrandissement de la zone à agrandir à l'instant en cours, en agrandissant la distance entre le point de référence et chaque objet graphique dans la zone à agrandir à l'instant en cours, et l'étape d'affichage de chaque objet graphique suite à l'agrandissement, comprennent les étapes ci-dessous consistant à :
établir un système de coordonnées en prenant le point de référence comme origine des coordonnées ; dans le système de coordonnées, ajuster une distance horizontale et une distance longitudinale de chaque objet graphique dans la zone à agrandir à l'instant en cours par rapport au point de référence selon un rapport d'échelle, tout en maintenant inchangées des connexions entre ledit quelconque premier équipement NE et ledit lien quelconque ainsi que des positions relatives dudit quelconque premier équipement NE et dudit lien quelconque ; et agrandir l'icône dudit quelconque premier équipement NE et l'icône du lien quelconque selon le rapport d'échelle.

2. Procédé selon la revendication 1, dans lequel l'étape de détermination de chaque objet graphique dans la zone à agrandir à l'instant en cours comprend les étapes ci-dessous consistant à :
pour un nouvel équipement NE apparaissant nouvellement dans la zone à agrandir à l'instant en cours par rapport à un quelconque objet graphique apparaissant dans une zone à agrandir correspondant à un dernier instant, supprimer un quelconque objet graphique optimisé correspondant au nouvel équipement NE stocké le plus récemment, et déterminer les objets graphiques complets correspondant au nouvel équipement NE à l'instant en cours ;
pour un nouveau lien apparaissant nouvellement dans la zone à agrandir à l'instant en cours par rapport à un quelconque objet graphique apparaissant dans la zone à agrandir correspondant au dernier instant, déterminer une icône, une étiquette, un avertissement et un état de fonctionnement du nouveau lien en tant qu'un objet graphique correspondant au nouveau lien ;
lorsqu'un des deux équipements NE situés aux deux extrémités d'un lien s'est trouvé dans la zone à agrandir correspondant au dernier instant, mais a disparu de la zone à agrandir à l'instant en cours, supprimer les objets graphiques complets correspondant audit un des deux équipements NE, et déterminer l'objet graphique optimisé correspondant audit un des deux équipements NE.

3. Dispositif destiné à agrandir un graphique local dans une topologie, le dispositif comprenant :
une unité de détermination de zone (41) configurée de manière à : déterminer, dans la topologie, une zone à agrandir à un instant en cours ;
une unité de détermination d'objet graphique (42) configurée de manière à : déterminer chaque objet graphique dans la zone à agrandir à l'instant en cours ;
une unité de détermination de point de référence (43) configurée de manière à : déterminer un point de référence dans la zone à agrandir à l'instant en cours ;
une unité d'agrandissement (44) configurée de manière à : agrandir la zone à agrandir à l'instant en cours en agrandissant une distance entre le point de référence et chaque objet graphique dans la zone à agrandir à l'instant en cours ; et
une unité d'affichage (45) configurée de manière à : afficher chaque objet graphique suite à l'agrandissement ;
une unité de stockage (46) configurée de manière à : stocker chaque objet graphique dans la zone à agrandir à l'instant en cours ;
l'unité de détermination d'objet graphique (42) étant en outre configurée de manière à :
déterminer chaque objet graphique correspondant à un quelconque premier équipement d'élément de réseau, « NE » en abrégé, apparaissant dans la zone à agrandir à l'instant en cours, en tant que des objets graphiques complets correspondant audit quelconque premier équipement NE ; et
déterminer chaque objet graphique correspondant à un lien quelconque apparaissant dans la zone à agrandir à l'instant en cours en tant qu'une icône, une étiquette, un avertissement, et un état de fonctionnement dudit lien quelconque ;
déterminer chaque objet graphique correspondant à un quelconque second équipement NE à une quelconque extrémité dudit lien quelconque n'apparaissant pas dans la zone à agrandir à l'instant en cours, en tant qu'un objet graphique optimisé correspondant audit quelconque second équipement NE ;
dans lequel les objets graphiques complets correspondant à un équipement NE correspondent à une icône, une étiquette, un avertissement et un état de fonctionnement de l'équipement NE, et l'objet graphique optimisé correspondant à l'équipement NE est l'icône de l'équipement NE ;
l'unité d'agrandissement (44) étant en outre configurée de manière à :
établir un système de coordonnées en prenant le point de référence comme origine des coordonnées ; dans le système de coordonnées, ajuster une distance horizontale et une distance longitudinale de chaque objet graphique dans la zone à agrandir à l'instant en cours par rapport au point de référence selon un rapport d'échelle, tout en maintenant inchangées des connexions entre ledit quelconque premier équipement NE et ledit lien quelconque ainsi que des positions relatives dudit quelconque premier équipement NE et dudit lien quelconque; et agrandir l'icône dudit quelconque premier équipement NE et l'icône du lien quelconque selon le rapport d'échelle.

4. Dispositif selon la revendication 3, dans lequel l'unité de détermination d'objet graphique (42) est en outre configurée de manière à :
pour un nouvel équipement NE apparaissant nouvellement dans la zone à agrandir à l'instant en cours par rapport à un quelconque objet graphique apparaissant dans une zone à agrandir correspondant à un dernier instant, supprimer un quelconque objet graphique optimisé correspondant au nouvel équipement NE stocké le plus récemment, et déterminer les objets graphiques complets correspondant au nouvel équipement NE à l'instant en cours ;
pour un nouveau lien apparaissant nouvellement dans la zone à agrandir à l'instant en cours par rapport à un quelconque objet graphique apparaissant dans la zone à agrandir correspondant au dernier instant, déterminer une icône, une étiquette, un avertissement et un état de fonctionnement du nouveau lien en tant qu'un objet graphique correspondant au nouveau lien ;
lorsqu'un des deux équipements NE situés aux deux extrémités d'un lien s'est trouvé dans la zone à agrandir correspondant au dernier instant, mais a disparu de la zone à agrandir à l'instant en cours, supprimer les objets graphiques complets correspondant audit un des deux équipements NE, et déterminer l'objet graphique optimisé correspondant audit un des deux équipements NE.

5. Support de stockage lisible par ordinateur, dans lequel sont stockées des instructions exécutables par ordinateur pour exécuter le procédé selon l'une quelconque des revendications 1 à 2.
